# EUROPEAN PATENT SPECIFICATION

(11) **EP 0 655 049 B1**
(45) Date of publication and mention of the grant of the patent: **09.07.1997**
(21) Application number: 93917822.4
(22) Date of filing: 19.08.1993
(51) Int. Cl.: B65G 11/14, B28C 7/16, B60P 3/16

(54) **CHUTE FOR MIXER DISCHARGE**
ENTLADERINNE FÜR BETONMISCHER
GOULOTTE DE DECHARGE POUR BETONNIERE

(30) Priority: 20.08.1992 FI 923732
(43) Date of publication of application: 31.05.1995
(73) Proprietor: LAITE-SARAKA OY, FIN-28400 Ulvila (FI)
(72) Inventor: KARILAINEN, Jarmo, FIN-28400 Ulvila (FI)
(74) Representative: Gilmour, David Cedric Franklyn
(86) International application number: FI9300328
(87) International publication number: WO9404448

(56) References cited:
- US-A- 708 081
- US-A- 801 252
- US-A- 1 364 581
- US-A- 1 401 837
- US-A- 2 815 840
- US-A- 3 157 262
- US-A- 5 035 313

## Description

The present invention relates a discharge chute especially for use in connection with a concrete carrying mixer, such as a rotating container or a like mounted on the chassis of a truck. The discharge chute includes at least two substantially overlapping chute sections movable relative to each other in the longitudinal direction of the discharge chute preferably by means of hydraulic drive mechanisms or the like. Each chute section includes an intermediate portion, comprising at least a discharge guiding trough or a like, and edge portions which are fitted with a slide-support assembly for enabling at least the relative movement of overlapping chute sections and for bracing the same together.

The most common practical way of effecting the transport of concrete and its further processing on a working site is such that concrete is carried by means of a concrete mixing vehicle or a concrete carrying mixer to a working site, wherein the concrete is most commonly further transferred to its deposit point by means of other accessories included in the vehicle. Thus, the concrete carrying mixer conventionally includes, in addition to a rotating container and a charging/discharging funnel, a multi-section discharge chute for removing concrete from the rotating container to a concrete deposit point located therebelow. The discharge chutes are typically operating on a telescopic principle for adjusting the length of a discharge chute whenever necessary by moving the chute sections included therein relative to each other in longitudinal direction. In the prior art, however, the number of chute sections is limited by the way of providing a slide-support assembly therebetween, whereby one section is provided with a guide/support bar and the other respectively with a tubular body surrounding said bar. The sliding between chute sections is effected either by slipping or rolling and, thus, slide pads or bearings are fitted between the guide/support bar and the tubular body.

Since the above-described arrangements require that, in practice, a discharge chute be composed of two, not more than three elements, even the shortest possible discharge chute will be relatively long and bulky. In the present application this is a major drawback since the concrete carrying mixers are abundantly fitted with accessories. In addition, the chute sections as well as various slide-support mechanisms associated therewith must be manufactured to exact measurements for a guaranteed compatibility between the chute sections. Since the above-type of construction includes closed structures, the assembly of a discharge chute is inconvenient and also, due to possible crevice corrosion, the use of a discharge chute requires careful maintenance, i.e. inspection and maintenance operations performed at certain intervals.

US-A-1 401 837 discloses a telescopic chute with upper edge portions bent 90° inwards to form a slide support assembly for the nested tubes. This design unfortunately requires a high accuracy of manufacturing and is prone to jamming.

An object of a discharge chute of this invention is to provide a decisive improvement on the above drawbacks and thus to substantially raise the prior art. In order to achieve this object a discharge chute of the invention is provided according to claim 1.

The most significant advantages gained by a discharge chute of the invention include the simple manufacturing of chute sections and assembly of a discharge chute. The invention enables the manufacturing of chute sections merely by bending continuous sheet material and, thus, the assembly of identically bent chute sections into a discharge chute is also simple. Unlike the prior art, the discharge chute can be composed of four or more sections and, hence, it is possible to account for other outfitting of a concrete carrying mixer or the length of a discharge chute required by a particularly long delivery distance.

Other non-independent claims disclose preferred embodiments for a discharge chute of the invention.

The invention will be described in more detail in the following specification with reference made to the accompanying drawings, in which
- fig. 1: is a perspective view of a discharge chute of the invention in extended position,
- fig. 2: shows a cross-section of a discharge chute of the invention, and
- fig. 3: shows one alternative embodiment.

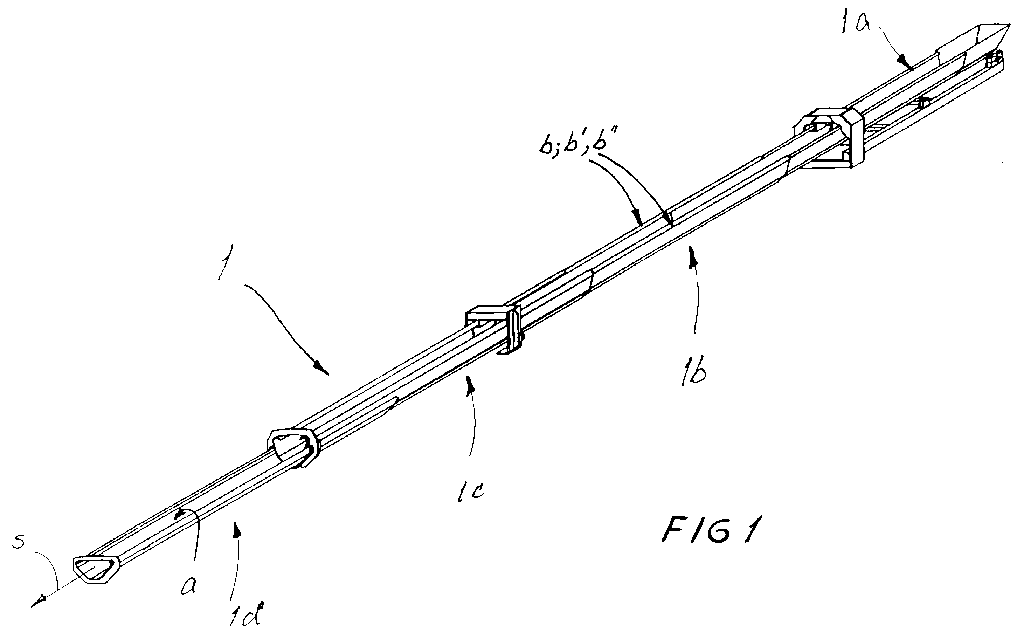

A discharge chute shown in extended position in fig. 1 is especially intended for use in connection with a concrete carrying mixer, such as a rotating container or a like mounted on the chassis of a truck. The discharge chute 1 includes at least two substantially overlapping chute sections 1a, 1b, 1c movable relative to each other in the longitudinal direction s of discharge chute 1 preferably by means of hydraulic drive mechanisms or the like. Each chute section 1a, 1b, 1c includes an intermediate portion a, comprising a discharge trough, and edge portions b which are fitted with a slide-support assembly for enabling the relative movement of overlapping chute sections and for bracing the same together. The edge portions b of chute sections 1a, 1b, 1c of discharge chute 1 are essentially identically shaped in cross-section and thus adapted to be overlapped on each other, whereby said edge portions b, being spaced a distance from each other, essentially form said slide-support assembly.

In the discharge chute embodiments shown in figs. 1-3, the intermediate portion a of a chute section is manufactured from a thin-walled profiled sheet, the edge portions b of a chute section section being in cross-section adapted to extend laterally from intermediate portion a. Thus, in a preferred embodiment, each edge portion b', b'' in each chute section is formed as an extension or a like merging into intermediate portion a at a single junction.

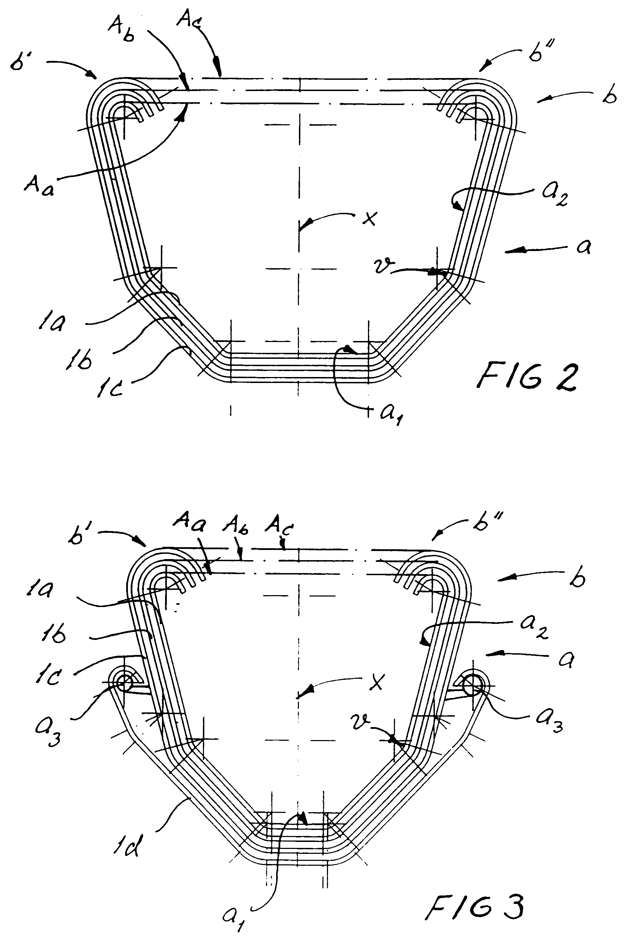

According to the principle shown especially in figs. 2 and 3, the chute sections of discharge chute 1 are adapted to be coupled with each other by means of a slide-support assembly such that the chute sections are immobilized relative to each other in directions other than longitudinal direction s. This is accomplished by adapting each edge portion b', b'' of the chute sections to extend essentially towards the center x of a discharge chute. In a preferred embodiment, the chute sections are also substantially complementary in cross-section, the cross-sectional areas Aa, Ab, Ac defined by the contours thereof being different from each other for enabling the overlapping or telescoping action, whereby Aa < Ab < Ac.

The entire chute section of discharge chute 1, including both intermediate portion a and edge portion b, is produced by bending a continuous sheet material. Thus, according to a further preferred embodiment, in each chute section a bottom wall a1, serving as intermediate portion a, and side walls a2 are made of substantially flat surfaces and edge portions b', b'' are made of curved surfaces. Naturally, in an effort to obtain a total weight as optimal as possible by using material thickness as thin as possible, the side walls a2 of intermediate portion a in each chute section are further provided with one extra bend v for increased bracing effect. In addition, the edge portions b', b'' of each chute section are shaped in cross-section as a semi-circular arc for avoiding closed tubular structures, which create problems during use e.g. in the form of crevice corrosion.

In a preferred embodiment of the invention, the chute sections of a discharge chute are adapted to be dismantled from below and, thus, in the operating situation shown in fig. 1, the following, further extending chute section 1b, 1c continues from below the preceding chute section 1a, 1b. Fig. 1 does not illustrate any operating means for moving the chute sections relative to each other. Conventionally, this is effected by fitting hydraulic operating cylinders below a discharge chute and, in this respect, such conventional solutions can be used in a discharge chute of the invention.

In a further preferred embodiment, it is possible to use slide pads or blocks between the chute sections. In a discharge chute of the invention, such slide pads can be fitted in cross-section between the bottom surface of the edge portions of next chute section 1b, 1c and the top surface of the corresponding edge portions of preceding chute section 1a, 1b. Such slide-improving and wear-reducing slide pads are not illustrated in detail in the annexed figures.

In the embodiment shown in figs. 1 and 3, the discharge chute is further provided with a fourth chute section 1d operating on the currently applied principle. Thus, below a side wall a2 of the intermediate portion a of chute section 1c preceding it is fitted a separate rail a3 for guiding and supporting the outermost chute section 1d.

It is obvious that the invention is by no means limited to the above embodiments but within the scope of the claims it can be modified considerably. Naturally, most varying materials, including even non-metallic materials, can be used for manufacturing the chute sections for a discharge chute. When manufactured from continuous sheet material, said chute sections can also bent into shapes different from those described above. Thus, the intermediate portion can be made curving, such as elliptical or semi-circular.

## Claims

1. A discharge chute for use especially in connection with a concrete carrying mixer, such as a rotating container or a like mounted on the chassis of a truck, said discharge chute (1) manufactured by working continuous sheet material, such as by bending or in a similar fashion, and including at least two substantially overlapping chute sections movable relative to each other in the longitudinal direction (s) of discharge chute (1) preferably by means of hydraulic drive mechanisms or the like, each chute section (1a, 1b, 1c) including an intermediate portion (a), comprising a bottom wall (a1) and side walls (a2) forming a discharge guiding trough, and edge portions (b', b'') which are provided as a slide-support assembly for enabling at least the relative movement of overlapping chute sections and for bracing the same together, each edge portion (b', b'') of chute sections (1a, 1b, 1c) extending essentially towards the center (x) of the discharge chute (1), whereby at least some (1a, 1b, 1c) of the overlapping chute sections of discharge chute (1) are essentially identically shaped in cross-section and thus adapted to be overlapped on each other such that the edge portions (b', b'') of chute sections (1a, 1b, 1c), being spaced a distance from each other, essentially form said slide-support assembly, **characterized** in that the cross-section of each edge portion (b', b'') of each chute section (1a, 1b, 1c) is curved and open, the shape being a semi-circular arc or like curved portion.

2. A discharge chute as set forth in claim 1, **characterized** in that the side walls (a2) of intermediate portion (a) in chute section (1a, 1b, 1c) are provided with at least one extra bend (v) for increased bracing effect.

## Patentansprüche

1. Entladerinne zur Verwendung insbesondere zusammen mit einem Betonmischer, z. B. einem auf einem Fahrgestell angeordneten drehbaren Behälter oder dgl., wobei die Entladerinne (1) durch Verformung eines gezogenen plattenförmigen Materials, z. B. durch Biegen oder dgl., hergestellt worden ist und wenigstens zwei im wesentlichen sich überlappende Rinnenabschnitte aufweist, die relativ zueinander in Längsrichtung (s) der Entladerinne (1) beweglich sind, vorzugsweise mit Hilfe eines hydraulischen Antriebs oder dgl.; jeder Rinnenabschnitt (1a, 1b, 1c) weist ein Zwischenteil (a) auf, mit einer Bodenwand (a1), mit Seitenwänden (a2), die einen Entlade-Führungstrog bilden und mit Randteilen (b', b''), die als Gleitführungsanordnung ausgestaltet sind und wenigstens die Relativbewegung der sich überlappenden Rinnenabschnitte und ihren Zusammenhalt ermöglichen; jedes Randteil (b', b'') der Rinnenabschnitte (1a, 1b, 1c) erstreckt sich im wesentlichen zur Mitte (x) der Entladerinne (1) hin; wenigstens einige (1a, 1b, 1c) der sich überlappenden Rinnenabschnitte der Entladerinne (1) weisen einen im wesentlichen identischen Querschnitt auf, so daß sie sich gegenseitig dergestalt überlappen, daß, die Randteile (b', b'') der Rinnenabsschnitte (1a, 1b, 1c), die im Abstand voneinander angeordnet sind, im wesentlichen die Gleitführungsanordnung bilden, dadurch gekennzeichnet, daß der Querschnitt eines jeden Randteils (b', b'') eines jeden Rinnenabschnitts (1a, 1b, 1c) gebogen und offen ist, wobei die Form ein Halbkreisbogen oder ein ähnlich gebogenes Teil ist.

2. Entladerinne nach Anspruch 1, dadurch gekennzeichnet, daß die Seitenwände (a2) des Zwischenteils (a) im Rinnenabschnitt (1a, 1b, 1c) mit wenigstens einem eigenen Biegeteil (v) für eine verbesserte Haltewirkung versehen sind.

## Revendications

1. Goulotte d'évacuation destinée à être utilisée en particulier avec un mélangeur transporteur de béton, tel qu'un récipient rotatif ou analogue monté sur le châssis d'un camion, la goulotte (1) d'évacuation étant fabriquée par usinage d'un matériau continu en feuille, par exemple par cintrage ou de manière analogue, et comprenant au moins deux tronçons de goulotte qui se recouvrent notablement et qui sont mobiles l'un par rapport à l'autre dans la direction longitudinale (s) de la goulotte d'évacuation (1), de préférence sous la commande de mécanismes hydrauliques d'entraînement ou analogues, chaque tronçon (1a, 1b, 1c) de goulotte ayant une partie intermédiaire (a) comprenant une partie de fond (a1) et des parois latérales (a2) formant une rigole de guidage d'évacuation, et des parties de bord (b', b'') qui forment un ensemble de support coulissant destiné à permettre au moins le déplacement relatif des tronçons de goulotte qui se recouvrent et à les renforcer mutuellement, chaque partie de bord (b', b'') des tronçons de goulotte (1a, 1b, 1c) s'étendant pratiquement vers le centre (x) de la goulotte d'évacuation (1), si bien que certains au moins (1a, 1b, 1c) des tronçons de goulotte qui se recouvrent dans la goulotte d'évacuation (1) ont des sections de formes pratiquement identiques et peuvent donc se recouvrir de manière que les parties de bord (b', b'') des tronçons de goulotte (1a, 1b, 1c) qui sont maintenus à une certaine distance les uns des autres, forment essentiellement l'ensemble de support coulissant, caractérisée en ce que la section de chaque partie de bord (b', b'') de chaque tronçon de goulotte (1a, 1b, 1c) est courbe et ouverte, la forme étant celle d'un demi-cercle ou d'une partie courbe analogue.

2. Goulotte d'évacuation selon la revendication 1, caractérisée en ce que les parois latérales (a2) de la partie intermédiaire (a) du tronçon de goulotte (1a, 1b, 1c) ont au moins une courbure supplémentaire (v) destinée à accroître l'effet de renforcement mécanique.
